# FASCICULE DE BREVET EUROPEEN

(11) **EP 0 690 765 B1**
(45) Date de publication et mention de la délivrance du brevet: **28.06.2000**
(21) Numéro de dépôt: 94911212.2
(22) Date de dépôt: 24.03.1994
(51) Int. Cl.: B23Q 11/00, B23K 7/10, B08B 15/00

(54) **DISPOSITIF DE RECUPERATION POUR MACHINE D'USINAGE**
WERKZEUGMASCHINE MIT VORRICHTUNG ZUR RÜCKGEWINNUNG
COLLECTING DEVICE FOR A CUTTING MACHINE

(30) Priorité: 24.03.1993 FR 9303378
(43) Date de publication de la demande: 10.01.1996
(73) Titulaire: AMADA EUROPE, 93290 Tremblay-en-France (FR)
(72) Inventeur: BENEDITE, Claude, F-94220 Charenton (FR); PLAZENET, Jean, F-94210 La-Varenne-Saint-Hilaire (FR)
(74) Mandataire: Dronne, Guy
(86) Numéro de dépôt international: FR9400325
(87) Numéro de publication internationale: WO9421423

(56) Documents cités:
- EP-A- 0 067 126
- EP-A- 0 213 235
- DE-A- 2 455 577
- DE-B- 2 648 327
- FR-A- 2 306 801
- PATENT ABSTRACTS OF JAPAN vol. 011, no. 218 (M-607) 15 Juillet 1987 & JP,A,62 034 678 (KOIKE) 14 Février 1987

## Description

La présente invention a pour objet une machine d'usinage par faisceau laser comprenant un dispositif qu'on appellera ultérieurement module, permettant de récupérer un certain nombre d'éléments résiduels de l'opération d'usinage qui seront explicités ultérieurement.

La machine concernée est destinée principalement au découpage, de matériaux en feuilles planes ou en volume déposées selon diverses méthodes sur un support ajouré désigné couramment sous le nom de palette.

Les matériaux sont usinés à l'aide d'un faisceau laser dont l'orientation est sensiblement verticale alors que le matériau à usiner occupe une position voisine de l'horizontal.

Pendant l'usinage le matériau est généralement immobile alors que le faisceau laser est déplacé par un dispositif permettant d'atteindre, en projection droite, n'importe quel point du plan XY défini par la projection droite de la feuille du matériau sur la palette horizontale.

L'usinage, dans de telles conditions, est obtenu lorsque le faisceau laser traverse le matériau, à la surface supérieure sur laquelle ils sont projetés.

L'usinage laser repose sur les conséquences de l'interaction entre la lumière et la matière à usiner. L'efficacité de cette interaction est largement conditionnée par le traitement de l'effet laser à la surface inférieure du matériau traversé par le faisceau laser.

Ce traitement doit permettre, pour aboutir à une efficacité maximale du procédé :
- l'aspiration des fumées ou autres déchets résultant de l'effet laser,
- la diminution, voire la suppression de dépôts d'oxydes résultant de l'interaction lumière/matière ou d'impuretés diverses, en tous points de la "tranchée" causée, dans le matériau par l'effet laser.

Toutes les machines utilisant l'effet laser pour découper une pièce sont soumises à la même obligation. Les solutions apportées à ce problème sont d'une efficacité variable.

D'une manière générale, pour les applications industrielles du laser, il est important, si l'on veut optimiser l'utilisation de ces sources d'énergie lors de l'usinage des matériaux, de bénéficier d'un dispositif qu'on appellera ultérieurement dispositif ou module de récupération . adapté pour le traitement du faisceau laser, résiduel après qu'il ait traversé la feuille du matériau usiné.

Les machines d'usinage des matériaux par faisceau laser appartiennent à deux grandes catégories définies par le type de déplacements relatifs du matériau à usiner par rapport à la source d'énergie utilisée pour l'usinage. On trouve les machines dites à têtes d'usinage fixes et les machines dites à tête d'usinage mobile.

Dans le premier cas, le matériau est déplacé selon deux directions orthogonales X et Y sous la tête d'usinage qui, elle, est fixe ; dans le second cas, le matériau se déplace parallèlement à l'un des deux axes X ou Y et la tête d'usinage se déplace parallèlement à l'autre axe ou encore, le matériau est immobile et la tête d'usinage se déplace au dessus du matériau selon les deux directions orthogonales X et Y.

On comprend que dans le premier cas, il est aisé de placer sous le matériau un dispositif fixe qui demeure à la verticale de la tête laser elle-même fixe et de récupérer le faisceau laser résiduel ainsi que les substrats générés par l'effet laser, après qu'il ait traversé le matériau usiné. Au contraire, dans le second cas, cette procédure n'est plus utilisable puisque la tête d'usinage n'est pas fixe. Le problème est bien sûr encore plus complexe dans le cas de pièces fixes et de têtes d'usinage se déplaçant selon les directions X et Y.

Dans les machines à tête laser mobile suivant un ou deux axes, on place en général sous le support ajouré de la feuille du matériau à usiner un bac d'aspiration dont la longueur et la largeur sont approximativement celles de la feuille de matériau et dont la hauteur varie de 0,3 à 1 mètre environ. Une canalisation d'aspiration qui aboutit sur l'une des faces du bac d'aspiration est reliée à son autre extrémité à un extracteur puissant par exemple 8.000m3 /heure de débit avec une pression voisine de 40 mm de colonne d seau environ.

Cette technique de récupération présente les défauts importants suivants qui font conclure à la quasi inefficacité du procédé de récupération :
le débit aspiré et la pression associée sont d'une valeur très faible par unité de surface du matériau usiné,
lorsque le matériau en feuille ne recouvre pas la totalité de la surface du support ajouré, les lacunes ainsi créées constituent des pertes de charges qui réduisent considérablement la puissance d'aspiration qui est déjà médiocre.
le manque d'efficacité de ce procédé d'aspiration peut provoquer des pollutions résultant de la mauvaise évacuation des substrats gazeux ou pulvérulents résultant de l'usinage laser lors de la découpe de certains matériaux dangereux (exemple: chlore, particules d'amiante...),
le niveau sonore de l'extracteur du système d'aspiration est tel qu'il est proche des seuils maxima fixés par la réglementation en la matière,
les substrats pulvérulents (scories), générés par l'interaction lumière/matière de l'effet laser, tombent au fond du bac qu'il faut donc nettoyer fréquemment ce qui diminue d'autant la disponibilité de la machine,
la récupération des petites pièces découpées, dont les dimensions ne permettent pas qu'elles demeurent sur le support ajouré du matériau en feuille, et qui tombent de ce fait au fond du bac au sein du dépôt poudreux des scories générées par l'interaction lumière/matière, est difficile et prend beaucoup de temps ce qui obère d'autant la productivité de la machine,
la disposition ponctuelle de la bouche d'aspiration sur l'une des faces du bac d'aspiration génère des turbulences et une orientation non désirée des flux d'air et de gaz brûlés à l'intérieur du bac d'aspiration. Ces flux orientent les flammes qui sortent du dessous du matériau (par les parties découpées sur ce matériau) ce qui a pour effet de créer des déformations des bords des pièces découpées (jusqu'à rendre ces pièces inutilisables car non conformes à la géométrie désirée. Ce défaut est particulièrement sensible dans le cas de la découpe de matériaux plastiques), et
l'insuffisance de la pression d'aspiration peut être la cause de turbulences qui génèrent en retour la réflexion d'étincelles jusqu'à la surface inférieure des matériaux découpés dans le cas d'usinage sur certains matériaux "légers" comme les alliages de titane utilisés dans l'industrie aéronautique. L'impact de ces étincelles sur la face inférieure de ces pièces entraîne leur rebut.

Afin de remédier à ces inconvénients, certains constructeurs de machines à tête laser ou à torche plasma ont tenté de limiter les effets dommageables de ce mode d'aspiration et de récupération dont l'efficacité est insuffisante en cloisonnant verticalement le bac d'aspiration ce qui entraîne de sérieuses difficultés de raccordement du système d'aspiration. Dans ce cas, les cloisons délimitent des caissons dont le volume est environ 4 à 12 fois, par exemple, inférieur à celui du bac sans cloison. L'aspiration est automatiquement provoquée sur un ou deux caissons mitoyens en fonction de la position de la tête de découpage. La face inférieure de chaque caisson est limitée par une bande transporteuse dont le mouvement est permanent sur toute la surface utile de la machine et parallèlement à sa grande longueur.

Les petites pièces résultant du découpage laser ou plasma qui tombent par gravité provoquent parfois un coincement de la bande transporteuse et en perturbent ainsi le fonctionnement. D'autre part, les scories générées par l'interaction lumière/matière obstruent les segments qui constituent l'ensemble de la bande transporteuse ce qui perturbe également son fonctionnement.

Dans tous les cas, cette amélioration dont le coût est élevé par rapport au coût global de la machine améliore l'efficacité du procédé sans faire tomber l'ensemble des critiques énoncées ci-dessus et laisse entier le fait que la totalité du volume interne à la machine est disposé sous la palette support du matériau en feuille et est indisponible pour d'autres applications que cette aspiration.

Pour remédier à ces inconvénients, un objet de l'invention est de fournir une machine d'usinage par faisceau laser a tête mobile comprenant un dispositif de récupération qui permette d'améliorer très sensiblement l'efficacité de l'aspiration tout en limitant le volume occupé par l'ensemble des moyens de récupération et en facilitant le nettoyage du dispositif de récupération.

Pour atteindre ce but, selon l'invention, la machine d'usinage par faisceau laser comprenant un bâti fixe comportant une surface ajourée pour supporter la pièce à usiner, un portique mobile en translation selon la longueur de ladite surface ajourée, une tête d'usinage par laser montée mobile sur ledit portique selon une direction horizontale perpendiculaire à la direction de déplacement dudit portique, et des moyens de déplacement dudit portique par rapport audit bâti, caractérisée en ce qu'elle comprend :
un module de récupération comprenant un caisson ouvert à sa partie supérieure et dont le fond est fermé, ledit caisson ayant une longueur sensiblement égale à la largeur de la surface ajourée et une largeur très inférieure à la longueur de ladite surface ajourée, ledit caisson étant séparé par des cloisons en une pluralité de volumes d'évacuation, et des moyens d'évacuation comprenant une pluralité d'éléments de conduite, chaque élément de conduite débouchant dans un des volumes et étant raccordé à une conduite d'évacuation et des moyens pour relier ladite conduite à des moyens fixes d'aspiration chaque élément de conduite étant équipé d'une vanne commandable individuellement;
des moyens de guidage dudit caisson selon la longueur de ladite surface ajourée, ledit caisson étant assujetti à rester sous ladite surface ajourée, et
des moyens de déplacement dudit caisson et des moyens pour provoquer le déplacement dudit caisson en synchronisme avec le déplacement dudit portique, par quoi l'ouverture dudit caisson est assujettie à rester en dessous de ladite tête d'usinage.

On comprend que grâce aux dispositions de l'invention, la place occupée par le module de récupération est très réduite par rapport au système de récupération de l'art antérieur. En outre, du fait que l'ouverture du caisson mobile du module est très réduite, l'efficacité de l'aspiration est très sensiblement améliorée. On comprend également que les petites pièces découpées sont récupérées par le caisson ainsi que les scories dans le cas de l'usinage laser.

Grâce à cette disposition également, on obtient une aspiration des vapeurs beaucoup plus efficace puisqu'elle est régulièrement répartie sur la largeur du caisson. On comprend qu'ainsi, on peut mieux suivre les déplacements de la tête d'usinage sur le portique.

Selon un mode préféré de mise en oeuvre, le caisson est muni d'une structure de grille disposée entre ladite ouverture et ledit fond pour retenir les petites pièces résultant de l'usinage de la plaque.

On comprend qu'avec ce mode de réalisation, les petites pièces sont séparées du reste des scories et autres substrats qui, eux vont jusqu'au fond du caisson.

Selon encore une autre caractéristique préférée de l'invention, les moyens d'évacuation sont des moyens d'aspiration qui comprennent une portion de tubulure solidaire de ladite conduite et présentant une extrémité libre, et une conduite solidaire du bâti de la machine s'étendant sur toute la longueur de la surface ajourée la conduite présentant une portion de sa paroi qui est formée par deux lèvres déformables se superposant partiellement, l'extrémité libre de la tubulure pénétrant entre lesdites lèvres en les déformant localement.

On voit, grâce à cette caractéristique préférée, qu'une conduite souple reliant un point fixe du bâti au caisson de récupération n'est pas nécessaire ce qui permet effectivement de libérer la place sous la surface ajourée de la machine c'est-à-dire sous la palette. En outre, le trajet d'aspiration étant réduit, il est donc plus efficace.

D'autres caractéristiques et avantages de l'invention apparaîtront plus clairement à la lecture de la description qui suit de plusieurs modes de réalisation de l'invention donnés à titre d'exemple non limitatif. La description se réfère aux figures annexées sur lesquelles :
la figure 1 est une vue en perspective de l'ensemble de la machine d'usinage ;
la figure 2 est une vue en coupe partielle transversale de la machine de la figure 1 montrant le portique et le module de récupération ;
la figure 3 est une vue en perspective partiellement coupée d'un mode de réalisation du caisson de récupération ;
la figure 4 est une vue en coupe transversale d'une variante de réalisation du caisson de récupération ;
la figure 5 est une vue de face d'un mode de réalisation du caisson de récupération illustrant les moyens d'aspiration ;
la figure 6 est une vue du caisson de récupération de la figure 5 en vue de côté selon la flèche 6 ; et
la figure 7 est un schéma montrant un mode préféré de réalisation de la liaison mécanique entre le portique et le caisson de récupération.

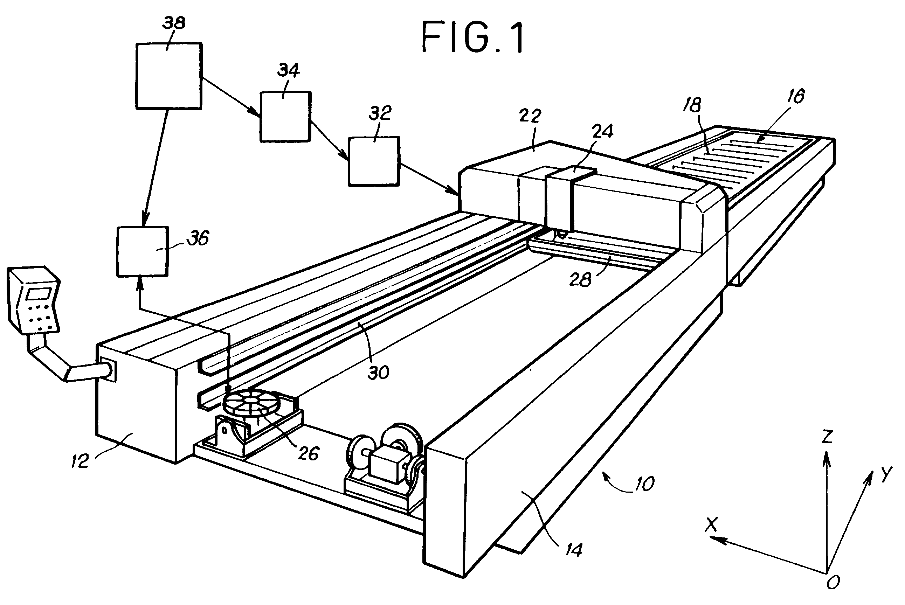

En se référant tout d'abord à la figure 1, on va décrire l'ensemble d'une machine d'usinage notamment d'une machine de découpage sur laquelle peut être monté le dispositif de récupération selon l'invention. De façon connue, cette machine comporte un bâti 10 comprenant deux parties latérales 12 et 14. Entre ces parties latérales est montée une palette 16 constituée par exemple par des lames parallèles 18. En situation de travail, la palette 16 est en position avancée sur les glissières 20 et immobilisée. Cette palette 16 est destinée à recevoir la pièce à usiner qui est donc en position sensiblement horizontale. La machine comporte également un portique 22 mobile au-dessus de la palette 16 en position de travail selon la direction longitudinale Y de la machine. Sur le portique 22 est montée une tête d'usinage 24 qui est une tête du type laser. Quel que soit le mode de réalisation, la tête d'usinage 24 peut être déplacée sur le portique 22 selon la direction X orthogonale à la direction Y et disposée dans un même plan horizontal.

On comprend qu'ainsi, par combinaison des déplacements du portique 22 selon la direction Y et de la tête d'usinage 24 selon la direction X, tous les points de la pièce à usiner peuvent être atteints par la tête d'usinage 24. Sur cette figure, on a également représenté schématiquement des moyens de déplacement selon la direction Y référencés 26. Selon l'invention, ces moyens de déplacement 26 permettent de déplacer selon cette direction Y un caisson de récupération 28 qui peut être déplacé selon la direction Y sur toute la longueur de la pièce à usiner disposée sur la palette 16 en position de travail. On a représenté schématiquement des glissières 30 de guidage du caisson 28. La caisson 28 constitue la partie essentielle du module de récupération.

Le caisson sert à la récupération des vapeurs, des scories et des petites pièces découpées.

Pour assurer sa fonction de récupération, le caisson 28, en fonctionnement normal, est assujetti à se déplacer en synchronisme avec le portique 22 de telle manière que le caisson soit en dessous de la tête d'usinage 24 quelque que soit sa position sur le portique. Une première solution consiste à relier mécaniquement par des moyens convenables le caisson et le portique et à entraîner l'ensemble à l'aide d'un même moteur. Une autre solution consiste à synchroniser les déplacements du portique 22 et du caisson 28. En effet, il est alors possible de désaccoupler le caisson et le portique. Cela permet d'amener le caisson dans une position où il n'est pas disposé sous le portique ce qui facilite les interventions sur le caisson pour sa maintenance ou pour son nettoyage.

Sur la figure 1, on a représenté schématiquement le circuit d'asservissement de la position du caisson 28 sur celle du portique 22. Ce circuit comporte l'actuateur 32 du portique selon la direction Y, le circuit de commande 34 de cet actuateur, le circuit de commande 36 du moteur d'entraînement 26 du caisson 28 et le circuit d'asservissement proprement dit relié aux circuits de commande 34 et 36. Sur cette figure, on n'a pas représenté les capteurs de position permettant de contrôler l'action des actuateurs. On comprend que grâce au circuit de commande 38, il est possible de supprimer l'asservissement et de commander séparément le déplacement du portique 22 et du caisson 28.

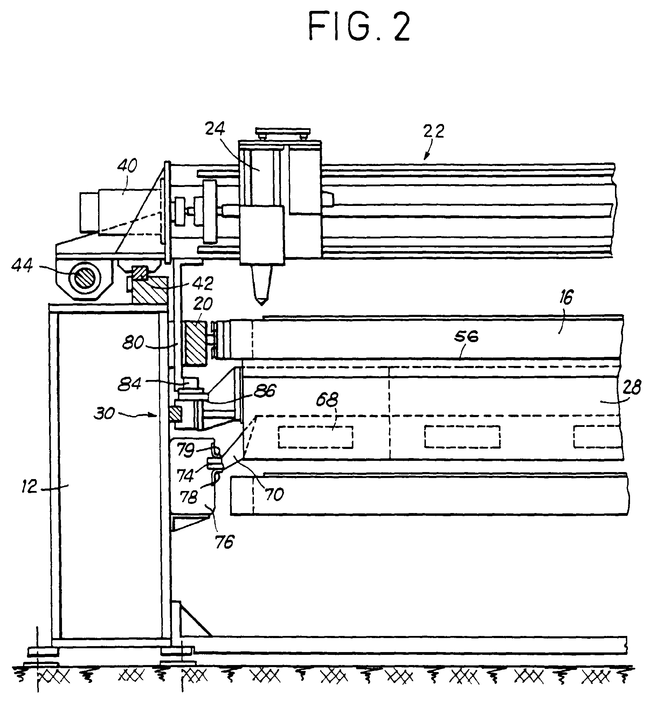

Sur la figure 2, on a représenté plus en détails les moyens mécaniques inclus dans le bâti 10 pour permettre le déplacement du caisson 28 et du portique 22. Dans le portique 22, on a représenté le moteur 40 permettant de commander les déplacements selon la direction X de la tête d'usinage 24. On a également représenté de façon schématique des moyens de guidage du portique 22 référencés 42 et des moyens de mise en déplacement 44 constitués par exemple par des systèmes à tiges filetées et à billes. Ces ensembles sont disposés dans la partie latérale 12 du bâti 10. On a également représenté la palette 16 en position de travail avec ses moyens de guidage 20. On a enfin représenté schématiquement les moyens de guidage en translation 30 du caisson 28 et les moyens d'entraînement en translation du caisson selon la direction Y, ces moyens consistant par exemple également en un système par vis et billes 46.

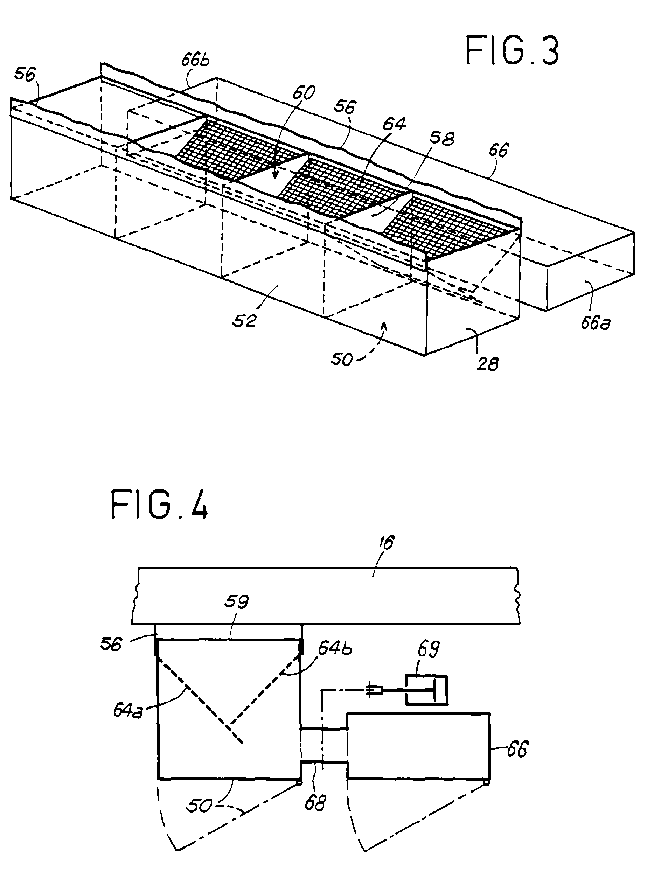

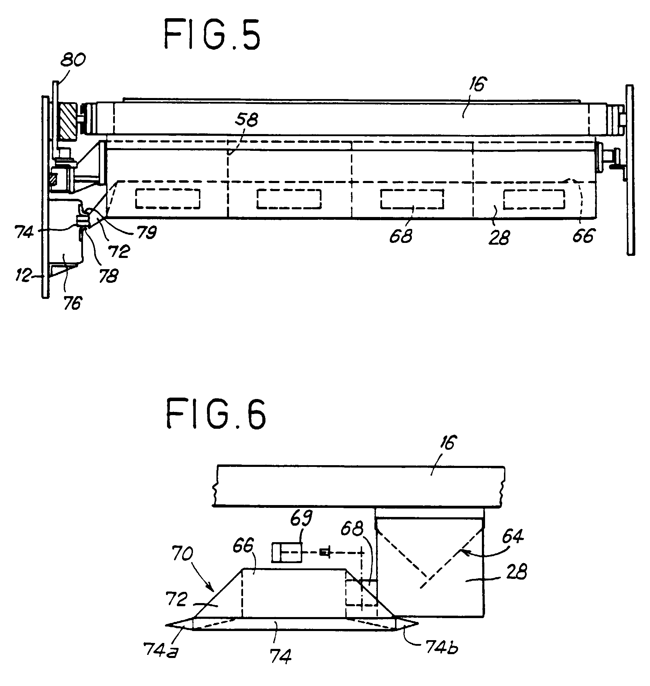

En se référant plus particulièrement aux figures 3 et 6, on va décrire un premier mode de réalisation du caisson 28. Le caisson 28 comporte un fond 50 sensiblement plat et des parois latérales 52. De préférence, les cloisons 52 sont prolongées par des lèvres déformables telles que 56 qui sont disposées à proximité immédiate des lames 18 formant la palette 16. A l'intérieur du caisson, on trouve des cloisons verticales 58 disposées perpendiculairement à la longueur du caisson sur toute la hauteur de celui-ci. Ces cloisons 58 définissent à l'intérieur du caisson des volumes 60 d'évacuation. Chaque volume d'évacuation 60 est équipé d'une structure formant grille 64 qui est interposée entre le fond 50 du caisson et son ouverture supérieure 28. De préférence la structure 64 est constituée par deux grilles inclinées 64a et 64b.

Comme le montre la figure 4, le fond 50 du caisson est articulé pour permettre son ouverture. Cette disposition permet de procéder commodément au nettoyage du fond du caisson.

Les figures 3 et 4 montrent que le caisson 28 est associé à une conduite 66 d'évacuation qui est externe au caisson et qui est parallèle à la longueur de celui-ci. La conduite 66 est reliée à chaque volume d'évacuation 60 du caisson par un élément de conduite 68 et chaque élément de conduite 68 est équipé d'une électrovanne 69. On commande les électrovannes en synchronisme avec le déplacement de la tête laser. Plus précisément, on commande chaque électrovanne de telle manière que le volume 60 en regard de la tête d'usinage et les deux volumes adjacents, lorsqu'ils existent, soient raccordés à la conduite 68, les autres vannes étant fermées. On comprend qu'on améliore l'aspiration en "localisant" la section d'aspiration en fonction de la position de la tête d'usinage. Les vannes peuvent être de tout type de préférence commandable à distance. Une extrémité 66a de la conduite 66 est de préférence fermée et son autre extrémité 66b est solidaire d'un ensemble de connexion 70 visible sur les figures 5 et 6. L'ensemble de connexion 70 permet de relier la conduite 66 à une conduite d'aspiration solidaire du bâti 12 de la machine, quelle que soit la position du caisson.

L'ensemble de connexion 70 comporte une portion convergente 72 raccordée à l'extrémité 66a de la conduite 66 et qui se termine par une portion de tubulure 74. Comme le montre la figure 6, la section droite de la tubulure 74 est très aplatie pour définir une fente allongée qui se termine par deux extrémités triangulaires 74a et 74b.

La figure 5 montre que l'extrémité de la tubulure 74 pénètre dans une conduite d'aspiration 76 solidaire de la partie 12 du bâti et qui s'étend sensiblement sur toute la longueur de celui-ci. La conduite 76 est raccordée à une installation d'aspiration.

Une partie de la paroi de la conduite 76 est constituée par l'ensemble de deux lèvres longitudinales flexibles 78 et 79 qui ont des longueurs suffisantes pour se recouvrir mutuellement afin d'assurer l'étanchéité de la conduite 76. L'extrémité libre de la tubulure 74 pénètre dans la conduite 76 en déformant localement les lèvres 78 et 79 de manière à réaliser une étanchéité mobile entre la tubulure 74 et les lèvres 78 et 80. Pour favoriser l'écartement des deux lèvres, l'extrémité de la tubulure 74 est munie de deux portions triangulaires 74a et 74b. On comprend, en outre, que la dépression qui règne dans la conduite 76 tend à maintenir les lèvres en appui l'une sur l'autre ce qui améliore l'étanchéité de cette conduite.

Selon un mode préféré de réalisation du caisson, sa largeur, selon la direction Y, est de 300 mm environ, et sa hauteur totale de l'ordre de 400 mm. La distance entre les lèvres est de l'ordre de 100 mm. Cette distance est très réduite par rapport à la longueur totale de la palette 16 supportant la pièce à usiner. La distance entre l'extrémité libre des lèvres et la face inférieure des lames 18 (ou pointes) de la palette 16 est de l'ordre de quelques millimètres.

Les avantages de la forme du caisson 28 apparaissent clairement à la lecture de la description précédente. D'une part, l'ouverture supérieure 59 du caisson définie par les lèvres a une section réduite et est disposée à proximité immédiate de la palette 16. Cela améliore donc très sensiblement l'effet d'aspiration. Enfin, la grille 64 permet de retenir, dans la zone a disposée au dessus de celle-ci à l'intérieur du caisson, les petites pièces résultant du découpage par le faisceau laser ou l'arc plasma. Les petites pièces s'accumulent au fond des portions inclinées 64a et 64b de la grille, laissant ainsi dégagées les parties supérieures pour favoriser la continuité de l'aspiration.

En variante, il est possible de prévoir sous la table de travail 16 et donc au-dessus de la zone de déplacement du caisson une grille horizontale fixe destinée à recueillir les petites pièces découpées. Cette grille fixe horizontale peut remplacer les structures de grille prévues dans chaque volume du caisson ou s'ajouter à celle-ci.

Selon également une variante de réalisation, la structure de grille 64 prévue dans chaque volume 60 peut être amovible. Elle a de préférence, en section droite, une forme trapézoïdale ou triangulaire pour recueillir en son fond les petites pièces découpées tout en laissant un passage suffisant pour l'aspiration. La structure de grille est alors assimilable à un panier qui repose par exemple par ses bords supérieurs sur deux bords supérieurs de paroi limitant un volume.

Comme on l'a déjà indiqué le portique 22 et le caisson 28 doivent se déplacer en synchronisme selon la direction Y lors des phases de fonctionnement normal de la machine. Ce résultat peut être obtenu en asservissant les moyens de déplacement du caisson aux moyens de déplacement du portique. C'est ce qui est illustré par la figure 1. Une autre solution illustrée par les figures 2 et 8 consiste à réaliser une liaison mécanique bidirectionnelle entre le portique 22 et le caisson 28. Pour cela, le portique 22 est solidaire d'une tige verticale 80 dont l'extrémité inférieure 82 coopère avec un ensemble d'accouplement 84 monté sur les pièces de supportage 86 du caisson.

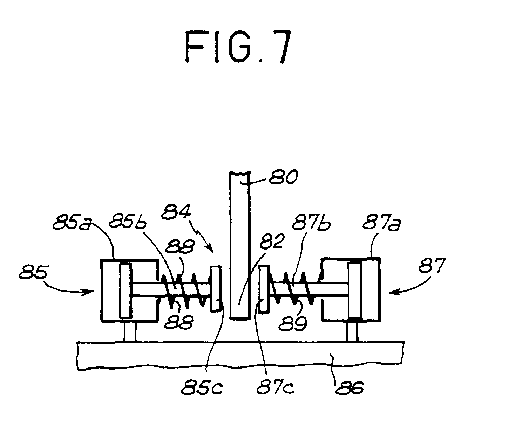

La figure 7 montre plus en détails l'ensemble d'accouplement 84 solidaire du caisson 28. Il comprend deux vérins hydrauliques 85 et 87 dont les corps 85a et 87a sont solidaires de la pièce 86. Les tiges 85b et 87b de ces vérins sont alignées et opposées et leurs extrémités 85c et 87c sont disposées de part et d'autre de l'extrémité 82 de la tige 80. Des ressorts 88 et 89 entourent respectivement les tiges 85b et 87b des vérins et tendent à faire sortir les tiges 85b et 87b des corps de vérin correspondant 85a et 87a.

Lorsqu'on commande le déplacement du portique, ce déplacement est transmis au caisson 28 par l'intermédiaire de la tige 80 et du vérin concerné 85 ou 87. La tige 85b ou 87b du vérin concerné tend à s'enfoncer dans le corps du vérin le vérin fonctionnant à la manière d'un dash-pot. Le ressort correspondant 88 ou 89 tend à ramener rapidement la tige du vérin dans sa position initiale.

Ce système d'accouplement non rigide permet d'absorber les efforts qui seraient appliqués sur la tige 80 sans l'effet des inerties du portique et du caisson. Cependant, sous l'effet du ressort, le caisson prend très rapidement la position imposée par le portique. Un autre avantage consiste dans le fait que la tige 80 reste verticale. Son extrémité 82 occupe donc exactement la même position que le portique et définit donc bien la position que doit prendre le caisson 28.

## Revendications

1. Machine d'usinage par faisceau laser comprenant un bâti fixe comprenant une surface ajourée pour supporter la plaque à usiner, un portique mobile en translation selon la longueur de ladite surface ajourée, une tête d'usinage par laser montée mobile sur ledit portique selon une direction horizontale perpendiculaire à la direction de déplacement dudit portique, et des moyens de déplacement dudit portique par rapport audit bâti, caractérisée en ce qu'elle comprend :en outre :
un module de récupération comprenant un caisson (28, 28') ouvert à sa partie supérieure (59) et dont le fond (50) est fermé, ledit caisson ayant une longueur sensiblement égale à la largeur de la surface ajourée (16) et une largeur très inférieure à la longueur de ladite surface ajourée, ledit caisson étant séparé par des cloisons (58) en une pluralité de volumes d'évacuation, et des moyens (76, 96) d'évacuation comprenant une pluralité d'éléments de conduite (68), chaque élément de conduite débouchant dans un des volumes et étant raccordé à une conduite d'évacuation (66) et des moyens (76) pour relier ladite conduite à des moyens fixes d'aspiration, chaque élément de conduite étant équipé d'une vanne (69) commandable individuellement,
des moyens de guidage (30) dudit caisson selon la longueur de ladite surface ajourée , ledit caisson étant assujetti à rester sous ladite surface ajourée, et
des moyens (26, 44) de déplacement dudit caisson et des moyens (36, 38, 80, 84) pour provoquer le déplacement dudit caisson en synchronisme avec le déplacement dudit portique (22), par quoi l'ouverture (59) dudit caisson est assujettie à rester en dessous de ladite tête d'usinage (24).

2. Machine d'usinage selon la revendication 1, caractérisée en ce que ledit caisson (28) est muni d'une structure de grille (64) disposée entre ladite ouverture (59) et ledit fond (50) pour retenir les petites pièces résultant de l'usinage de ladite plaque.

3. Machine d'usinage selon l'une quelconque des revendications 1 et 2, caractérisée en ce que ladite conduite d'évacuation (66) est solidaire dudit caisson et s'étend sensiblement sur toute sa longueur.

4. Machine d'usinage selon l'une quelconque des revendications 1 à 3, caractérisée en ce que ledit caisson (28) comporte des cloisons internes verticales (58) s'étendant sur toute sa hauteur, séparant le caisson en la pluralité de volumes d'évacuation (60).

5. Machine d'usinage selon l'une quelconque des revendications 1 à 4, caractérisée en ce que lesdits moyens d'évacuation sont des moyens d'aspiration débouchant à une extrémité (66b) de ladite conduite (66).

6. Machine d'usinage selon l'une quelconque des revendications 1 à 5, caractérisé en ce que ladite ouverture (59) du caisson est munie de lèvres (56) s'étendant sur toute la longueur du caisson.

7. Machine d'usinage selon l'une quelconque des revendications 1 à 6, caractérisée en ce que lesdits moyens d'évacuation sont des moyens d'aspiration qui comprennent une portion de tubulure (74) solidaire d'une extrémité de ladite conduite (66) présentant une extrémité libre et une conduite (76) solidaire dudit bâti s'étendant sensiblement sur toute la longueur de ladite surface ajourée, ladite conduite (76) présentant une portion de sa paroi formée par deux lèvres déformables (78, 79) se superposant partiellement, ladite extrémité libre de la tubulure pénétrant entre lesdites lèvres en les déformant localement.

8. Machine d'usinage selon l'une quelconque des revendications 1 à 7, caractérisée en ce que les moyens pour provoquer le déplacement en synchronisme dudit portique (22) et dudit caisson (28, 28') comprennent des organes de solidarisation mécanique.

9. Machine d'usinage selon l'une quelconque des revendications 1 à 7, caractérisée en ce que les moyens de déplacement en synchronisme dudit portique et dudit caisson (28, 28') comprennent des moyens (38) pour commander l'asservissement du déplacement dudit caisson (28, 28') à celui dudit portique (22).

10. Machine d'usinage selon la revendication 8, caractérisée en ce que lesdits organes de solidarisation mécanique comprennent une tige (80) solidaire dudit portique (22) dont l'extrémité (82) est interposée entre deux systèmes d'accouplement solidaires dudit caisson (28, 28') disposés de part et d'autre de l'extrémité (82) de ladite tige, chaque système d'accouplement comprenant un vérin (85, 87) dont le corps (85a, 87a) est solidaire dudit caisson et dont l'extrémité de la tige (85c, 87c) du vérin apte à coopérer avec ladite extrémité de ladite tige (80) et un système élastique (88, 89) tendant à ramener ladite extrémité de la tige de vérin au contact de l'extrémité de ladite tige (80).

11. Machine d'usinage selon la revendication 2, caractérisée en ce que la structure de grille (64) comprend deux grilles inclinées (64a, 64b) pour retenir les petites pièces à leur partie inférieure.

12. Machine d'usinage selon l'une quelconque des revendications 1 à 11, caractérisé en ce qu'elle comprend en outre une structure de grille horizontale solidaire de la face inférieure de ladite surface ajourée.

13. Machine d'usinage selon la revendication 2, caracterisée en ce que chaque volume (60) d'évacuation est muni d'une structure de grille (64).

14. Machine d'usinage selon la revendication 13, caractérisée en ce que ladite structure de grille (64) est amovible.

## Claims

1. Laser-beam machining tool comprising a fixed frame comprising an open-work surface for supporting the plate to be machined, a gantry that is moveable in translation along the length of said open-work surface, a laser machining head mounted so as to be moveable on said gantry in a horizontal direction perpendicular to the direction of displacement of said gantry, and means for displacing said gantry relative to said frame, characterised in that it further comprises:
a recovery module comprising a box (28, 28') open in its upper portion (59) and the bottom (50) of which is closed, said box having a length substantially equal to the width of the open-work surface (16) and a width very much less than the length of said open-work surface, said box being separated by partitions (58) into a plurality of discharge volumes, and discharge means (76, 96) comprising a plurality of conducting members (68), each conducting member opening out into one of the volumes and being connected to a discharge conduit (66) and means (76) for connecting said conduit to fixed suction means, each conducting member being fitted with an individually controllable valve (69);
means (30) for guiding said box along the length of said open-work surface, said box being constrained to remain under said open-work surface, and
means (26, 44) for displacing said box and means (36, 38, 80, 84) for causing the displacement of said box in synchronisation with the displacement of said gantry (22), by which the opening (59) of said box is constrained to remain below said machining head (24).

2. Machining tool according to Claim 1, characterised in that said box (28) is provided with a grid structure (64) arranged between said opening (59) and said bottom (50) in order to retain the small parts resulting from the machining of said plate.

3. Machining tool according to either one of Claims 1 and 2, characterised in that said discharge conduit (66) is integral with said box and extends over substantially its whole length.

4. Machining tool according to any one of Claims 1 to 3, characterised in that said box (28) comprises vertical internal partitions (58) extending over its whole height, separating the box into the plurality of discharge volumes (60).

5. Machining tool according to any one of Claims 1 to 4, characterised in that said discharge means are suction means opening out at one end (66b) of said conduit (66).

6. Machining tool according to any one of Claims 1 to 5, characterised in that said opening (59) of the box is provided with lips (56) extending over the whole length of the box.

7. Machining tool according to any one of Claims 1 to 6, characterised in that said discharge means are suction means that comprise a portion of pipe (74) integral with one end of said conduit (66) having one free end and a conduit (76) integral with said frame extending substantially over the whole length of said open-work surface, said conduit (76) having a portion of its wall formed by two deformable lips (78, 79) partly superimposed over one another, said free end of the pipe penetrating between said lips and deforming them locally.

8. Machining tool according to any one of Claims 1 to 7, characterised in that the means for causing the displacement in synchronisation of said gantry (22) and said box (28, 28') comprise mechanical fixing components.

9. Machining tool according to any one of Claims 1 to 7, characterised in that the means for displacing in synchronisation said gantry and said box (28, 28') comprise means (38) for controlling the slaving of the displacement of said box (28, 28') to that of said gantry (22).

10. Machining tool according to Claim 8, characterised in that said mechanical fixing components comprise a rod (80) integral with said gantry (22), the end (82) of which is interpolated between two coupling systems integral with said box (28, 28') arranged on either side of the end (82) of said rod, each coupling system comprising an actuator (85, 87), of which the body (85a, 87a) is integral with said box and of which the end of the rod (85c, 87c) of the actuator capable of co-operating with said end of said rod (80) and a resilient system (88, 89) tending to bring said end of the actuator rod into contact with the end of said rod (80).

11. Machining tool according to Claim 2, characterised in that the grid structure (64) comprises two sloping grids (64a, 64b) to retain the small parts in their lower portion.

12. Machining tool according to any one of Claims 1 to 11, characterised in that it further comprises a horizontal grid structure integral with the lower face of said open-work surface.

13. Machining tool according to Claim 2, characterised in that each discharge volume (60) is provided with a grid structure (64).

14. Machining tool according to Claim 13, characterised in that said grid structure (64) is removable.

## Patentansprüche

1. Laserstrahl-Bearbeitungsmaschine mit einem feststehenden Bett, das eine durchbrochene Flache zum Stützen der zu bearbeitenden Platte aufweist, einem nach der Länge der durchbrochenen Fläche translatorisch verstellbaren Portal, einem Laserbearbeitungskopf, der am Portal in waagerechter, zur Verstellrichtung des Portals rechtwinkliger Richtung beweglich angeordnet ist, und Vorrichtungen zum Verstellen des Portals relativ zum Bett,
dadurch gekennzeichnet, daß sie außerdem aufweist:
- ein Rückgewinnungsmodul mit einem Kasten (28, 28'), der an seinem oberen Abschnitt (59) offen ist und dessen Boden (50) geschlossen ist, wobei der Kasten von einer Länge ist, die der Breite der durchbrochenen Fläche (16) im wesentlichen gleich ist, und von einer Breite, die sehr viel kleiner als die Länge der durchbrochenen Fläche ist, der Kasten durch Trennwände (58) in eine Vielzahl Absaugräume unterteilt ist, und mit Absaugvorrichtungen (76, 96) mit einer Vielzahl Leitungsstücken (68), von denen jedes in einen der Räume mündet und mit einer Absaugleitung (66) und mit Vorrichtungen (76) verbunden ist, welche die genannte Leitung mit feststehenden Saugeinrichtungen verbinden, wobei jedes Leitungsstück mit einem einzeln steuerbaren Schieber (69) versehen ist,
- Vorrichtungen (30) zum Führen des Kastens in Längsrichtung der durchbrochenen Fläche, wobei der Kasten so gesteuert wird, daß er unter der durchbrochenen Fläche bleibt, und
- Vorrichtungen (26, 44) zum Verstellen des Kastens und Vorrichtungen (36, 38, 80, 84) zum Auslösen der Verstellung des Kastens synchron mit der Verstellung des Portals (22), wodurch die Öffnung (59) des Kastens so gesteuert wird, daß sie unter dem Bearbeitungskopf (24) bleibt.

2. Bearbeitungsmaschine nach Anspruch 1,
dadurch gekennzeichnet, daß der Kasten (28) mit einer Gitterstruktur (64) versehen ist, die zwischen der Öffnung (59) und dem Boden (50) angeordnet ist, um die bei der Bearbeitung der genannten Platte anfallenden kleinen Stücke zurückzuhalten.

3. Bearbeitungsmaschine nach einem der Ansprüche 1 und 2,
dadurch gekennzeichnet, daß die Absaugleitung (66) mit dem Kasten fest verbunden ist und sich im wesentlichen über dessen ganze Länge erstreckt.

4. Bearbeitungsmaschine nach einem der Ansprüche 1 bis 3,
dadurch gekennzeichnet, daß der Kasten (28) senkrechte Innentrennwände (58) aufweist, die sich über seine ganze Höhe erstrecken und den Kasten in eins Vielzahl Absaugräume (60) unterteilen.

5. Bearbeitungsmaschine nach einem der Ansprüche 1 bis 4,
dadurch gekennzeichnet, daß die Absaugvorrichtungen Saugvorrichtungen sind, die an einem Ende (66b) der Leitung (66) münden.

6. Bearbeitungsmaschine nach einem der Ansprüche 1 bis 5,
dadurch gekennzeichnet, daß die Öffnung (59) des Kastens mit Lippen (56) versehen ist, die sich über die ganze Länge des Kastens erstrecken.

7. Bearbeitungsmaschine nach einem der Ansprüche 1 bis 6,
dadurch gekennzeichnet, daß die Absaugvorrichtungen Saugvorrichtungen sind, die ein Rohrstutzenstück (74), das mit einem Ende der Leitung (66) fest verbunden ist und ein freies Ende aufweist, und eine fest mit dem genannten Bett verbundene Leitung (76) umfassen, die sich im wesentlichen über die ganze Länge der durchbrochenen Fläche erstreckt und in ihrer Wand einen Abschnitt aufweist, der von zwei verformbaren, zum Teil übereinander angeordneten Lippen (78, 79) gebildet ist, wobei das freie Ende des Rohrstutzens unter örtlicher Verformung der genannten Lippen zwischen diese eindringt.

8. Bearbeitungsmaschine nach einem der Ansprüche 1 bis 7,
dadurch gekennzeichnet, daß die Vorrichtungen zum Auslösen der synchronen Verstellung des Portals (22) und des Kastens (28, 28') Bauteile zur mechanischen testen Verbindung umfassen.

9. Bearbeitungsmaschine nach einem der Ansprüche 1 bis 7,
dadurch gekennzeichnet, daß die Vorrichtungen zum synchronen Verstellen des Portals und des Kastens (28, 28') Vorrichtungen (38) für die Steuerung des Kastens (28, 28') in Abhängigkeit von der des Portals (22) umfassen.

10. Bearbeitungsmaschine nach Anspruch 8,
dadurch gekennzeichnet, daß die Bauteile zur mechanischen festen Verbindung eine mir dem Portal (22) fest verbundene Stange (80) umfassen, deren Ende (82) zwischen zwei mit dem Kasten (28, 28') fest verbundenen, beiderseits des Endes (82) der Stange angeordneten Kupplungsvorrichtungen angeordnet ist, wobei jede Kupplungsvorrichtung einen Arbeitszylinder (85, 87) umfaßt, dessen Hauptteil (85a, 87a) mit dem Kasten fest verbunden ist und das Ende (85c, 87c) der Stange des Arbeitszylinders mit dem genannten Ende der Stange (80) zusammenzuwirken vermag, und eine elastische Vorrichtung (88, 89), die das genannte Ende der Arbeitszylinderstange zur Anlage am Ende der Stange (80) zurückdrängt.

11. Bearbeitungsmaschine nach Anspruch 2,
dadurch gekennzeichnet, daß die Gitterstruktur (64) zwei geneigte Gitter (64a, 64b) zum Zurückhalten der kleinen Stücke an ihrem unteren Abschnitt umfaßt.

12. Bearbeitungsmaschine nach einem der Ansprüche 1 bis 11,
dadurch gekennzeichnet, daß sie ferner eine waagerechte Gitterstruktur aufweist, die mit der Unterseite der durchbrochenen Flache fest verbunden ist.

13. Bearbeitungsmaschine nach Anspruch 2,
dadurch gekennzeichnet, daß jeder Absaugraum (60) mit einer Gitterstruktur (64) versehen ist.

14. Bearbeitungsmaschine nach Anspruch 13,
dadurch gekennzeichnet, daß die Gitterstruktur (64) wegnehmbar ist.
